# EUROPEAN PATENT SPECIFICATION

(11) **EP 1 870 430 B1**
(45) Date of publication and mention of the grant of the patent: **01.01.2014**
(21) Application number: 06730517.7
(22) Date of filing: 29.03.2006
(51) Int. Cl.: C08J 9/00, B01D 71/26, C08J 5/18, B29C 55/02

(54) **MICROPOROUS POLYOLEFIN FILM AND PROCESS FOR PRODUCING THE SAME**
MIKROPORÖSE POLYOLEFINFOLIE UND HERSTELLUNGSVERFAHREN DAFÜR
FILM POLYOLEFINIQUE MICROPOREUX ET SON PROCEDE DE PRODUCTION

(30) Priority: 31.03.2005 JP 2005103861
(43) Date of publication of application: 26.12.2007
(73) Proprietor: Toray Battery Separator Film Co., Ltd., Tochigi (JP)
(72) Inventor: TAKITA, Kotaro, Tochigi, 3292735 (JP); KAIMAI, Norimitsu, Kanagawa, 2300074 (JP); NAKAMURA, Teiji, Tokyo, 1670031 (JP); KONO, Koichi, Saitama, 3510025 (JP)
(74) Representative: Strehl Schübel-Hopf & Partner
(86) International application number: PCT/JP2006/306569
(87) International publication number: WO 2006/106783

(56) References cited:
- EP-A1- 1 153 968
- EP-A1- 1 873 193
- JP-A- 6 240 036
- JP-A- 11 060 789
- JP-A- 2002 358 944
- JP-A- 2003 105 121
- JP-A- 2004 083 866

## Description

### FIELD OF THE INVENTION

The present invention relates to a microporous polyolefin membrane and its production method, in particular, to a microporous polyolefin membrane having large pore diameters, excellent air permeability, compression resistance and mechanical strength usable for battery separators and various filters, and its production method.

### BACKGROUND OF THE INVENTION

Microporous polyethylene membranes are used for various applications such as battery separators, diaphragms for electrolytic capacitors, various filters, water-vapor-permeable and waterproof clothing materials, reverse osmosis filtration membranes, ultra filtration membranes, micro filtration membranes, etc. When microporous polyethylene membrane is used for battery separators, particularly a lithium ion battery separator, its performance largely affects the properties, productivity and safety of batteries. Accordingly, the microporous polyethylene membrane is required to have excellent permeability, mechanical properties, heat shrinkage resistance, shutdown properties, meltdown properties, etc.

As a method for improving the properties of microporous polyethylene membranes, a method for optimizing material compositions, stretching temperatures, stretching magnifications, heat treatment conditions, etc. has been proposed. As a microporous polyolefin membrane having a proper pore diameter and a sharp pore diameter distribution, the applicant proposed, in JP6-240036A, for instance, a microporous polyolefin membrane made of a polyolefin containing 1% or more by mass of ultra-high-molecular-weight polyolefin having a weight-average molecular weight (Mw) of 7 x 10⁵ or more, the polyolefin having a molecular weight distribution (weight-average molecular weight/number-average molecular weight) of 10 to 300, the microporous polyolefin membrane having a porosity of 35 to 95%, an average penetrating pore diameter of 0.05 to 0.2 µm, a rupture strength (15-mm width) of 0.2 kg or more, and a pore diameter distribution (maximum pore diameter/average penetrating pore diameter) of 1.5 or less. As a method for producing such a microporous membrane, the applicant proposed a method comprising the steps of melt-blending the above polyolefin and a membrane-forming solvent, extruding the melt blend through a die, cooling the extrudate to form a gel molding, stretching the gel molding at least uniaxially at a temperature ranging from the crystal dispersion temperature of the above polyolefin to the melting point of the above polyolefin +10°C, removing the membrane-forming solvent from the stretched gel molding, heat-setting the resultant membrane at a temperature ranging from the crystal dispersion temperature of the above polyolefin to the melting point of the above polyolefin, and then stretching the heat-set membrane again at least uniaxially at a temperature equal to or lower than the melting point of the above polyolefin -10°C.

As a microporous polyolefin membrane having excellent permeability, the applicant further proposed, in WO 2000/20492, a microporous polyolefin membrane having fine fibrils, which is made of a polyolefin A having Mw of 5 x 10⁵ or more or a polyolefin composition B containing the polyolefin A, the microporous polyolefin membrane having an average pore diameter of 0.05 to 5 µm, and the percentage of lamellas at angles θ of 80 to 100° relative to a membrane surface being 40% or more in longitudinal and transverse cross sections. Further proposed to produce such a microporous membrane is a method comprising the steps of extruding through a die a solution comprising 10 to 50% by mass of the polyolefin A or the polyolefin composition B, and 50 to 90% by mass of a membrane-forming solvent, cooling the extrudate to form a gel molding, stretching the gel molding, if necessary, heat-setting the gel molding at temperatures ranging from the crystal dispersion temperature of the polyolefin A or the polyolefin composition B to its melting point +30°C, and removing the membrane-forming solvent.

Increasingly important recently as the properties of separators are not only permeability and heat shrinkage resistance, but also properties related to battery life such as battery cyclability and properties related to battery productivity such as electrolytic solution absorption. Particularly in the case of lithium ion batteries, electrodes expand and shrink according to intrusion and departure of lithium, and their expansion ratios have become larger recently because of increase in battery capacity. Because separators are compressed when the electrodes expand, the separators are required to suffer as little change as possible in permeability by compression, and to be so deformable as to absorb the expansion of electrodes. The microporous membranes disclosed in JP 6-240036 A and WO 2000/20492, however, are insufficient in compression resistance. The use of microporous membranes having insufficient compression resistance as battery separators is highly likely to cause the shortage of battery capacity (deterioration of cyclability).

### OBJECTS OF THE INVENTION

Accordingly, an object of the present invention is to provide a microporous polyolefin membrane having a large pore diameter and excellent air permeability, mechanical strength and compression resistance.

Another object of the present invention is to provide a method for producing such a microporous polyolefin membrane.

### DISCLOSURE OF THE INVENTION

As a result of intense research in view of the above objects, the inventors have found that a microporous polyolefin membrane having a large pore diameter and excellent air permeability, mechanical strength and compression resistance can be obtained by stretching a gel molding containing a polyolefin and a membrane-forming solvent at least uniaxially, heat-setting the stretched gel molding, removing the membrane-forming solvent, and then stretching the resultant membrane again at least uniaxially.

Thus, the microporous polyolefin membrane of the present invention is defined as in claim 1.

The method of the present invention for producing a microporous polyolefin membrane comprises the steps of (1) melt-blending a polyolefin and a membrane-forming solvent, (2) extruding the resultant melt blend through a die, (3) cooling the extrudate to form a gel molding, (4) subjecting the gel molding to a first stretching at least uniaxially, (5) heat-setting the stretched gel molding at a temperature ranging from the crystal dispersion temperature of the polyolefin to the melting point of the polyolefin, (6) removing the membrane-forming solvent from the heat-set gel molding, and (7) subjecting the resultant membrane to a second stretching at least uniaxially.

With a second stretching after the heat-setting treatment, the microporous polyolefin membrane is provided with a large pore diameter and excellent compression resistance. The second stretching magnification in a stretching direction is preferably 1.1 to 2.5 fold, to further improve the compression resistance. The second stretching temperature is preferably in a range from the crystal dispersion temperature of the polyolefin to the crystal dispersion temperature of the polyolefin +40°C, to improve the permeability. The first stretching may have two stages where the temperature is higher in the second stage than in the first stage. The heat-setting temperature is preferably higher than the first stretching temperature. Heat-setting is preferably conducted again after the second stretching.

### DESCRIPTION OF THE PREFERRED EMBODIMENTS

[1] Polyolefin

Polyolefin (PO) may be a single PO or a composition comprising two or more POs. Though not particularly restricted, the weight-average molecular weight (Mw) of the PO is generally 1 x 10⁴ to 1 x 10⁷, preferably 1 x 10⁴ to 15 x 10⁶, more preferably 1 x 10⁵ to 5 x 10⁶.

The PO preferably includes polyethylene (PE). The PE may include ultra-high-molecular-weight polyethylene (UHMWPE), high-density polyethylene (HDPE), middle-density polyethylene (MDPE) and low-density polyethylene (LDPE). These PEs may be not only ethylene homopolymers, but also copolymers having small amounts of other α-olefins. The other α-olefins than ethylene preferably include propylene, butene-1, hexene-1, pentene-1, 4-methylpentene-1, octene, vinyl acetate, methyl methacrylate, styrene, etc.

Though the PE may be a single PE, it is preferably a composition of two or more PEs. The PE composition may be a composition of two or more UHMWPEs having different Mws, a composition of similar HDPEs, a composition of similar MDPEs, or a composition of similar LDPEs, and it may be a composition comprising two or more PEs selected from the group consisting of UHMWPE, HDPE, MDPE and LDPE.

The PE composition is preferably composed of a UHMWPE having Mw of 5 x 10⁵ or more and a PE having Mw of 1 x 10⁴ or more and less than 5 x 10⁵. The Mw of the UHMWPE is preferably 5 x 10⁵ to 1 x 10⁷, more preferably 1 x 10⁶ to 15 x 10⁶, most preferably 1 x 10⁶ to 5 x 10⁶. The PE having Mw of 1 x 10⁴ or more and less than 5 x 10⁵ may be any of HDPE, MDPE and LDPE, though HDPE is preferable. The PE having Mw of 1 x 10⁴ or more and less than 5 x 10⁵ may be composed of two or more PEs having different Mws, or two or more PEs having different densities. With the upper limit of Mw of 15 x 10⁶, the PE composition is easily melt-extruded. The percentage of the UHMWPE in the PE composition is preferably 1% or more by mass, more preferably 10 to 80% by mass, based on 100% by mass of the entire PE composition.

Though not particularly restricted, the ratio of Mw/Mn (molecular weight distribution) of the PO, wherein Mn represents a number-average molecular weight, is preferably 5 to 300, more preferably 10 to 100. When the Mw/Mn is less than 5, the percentage of a high-molecular-weight component is too high to melt-extrude the PO solution easily. When the Mw/Mn is more than 300, the percentage of a low-molecular-weight component is too high, resulting in decrease in the strength of the microporous membrane. The Mw/Mn is used as a measure of a molecular weight distribution; the larger this value, the wider the molecular weight distribution. That is, the Mw/Mn of a single PO indicates its molecular weight distribution; the larger the value, the wider its molecular weight distribution. The Mw/Mn of a single PO can be properly controlled by a multi-stage polymerization. The multi-stage polymerization method is preferably a two-stage polymerization method comprising forming a high-molecular-weight polymer component in the first stage and forming a low-molecular-weight polymer component in the second stage. When the PO is a composition, a larger Mw/Mn means a larger difference of Mw between its components, and a smaller Mw/Mn means a smaller difference of Mw between them. The Mw/Mn of a PO composition can be properly controlled by adjusting the molecular weights and/or percentages of the components.

When the microporous PO membrane is used for a battery separator, the PO may contain polypropylene (PP) in addition to PE to raise the meltdown temperature of the separator and to improve the high-temperature-reserve-properties of the battery. The Mw of the PP is preferably 1 x 10⁴ to 4 x 10⁶. The PP may be a homopolymer, or a block copolymer and/or a random copolymer having the other α-olefin. The other α-olefin is preferably ethylene. The additional amount of PP is preferably 80% or less by mass based on 100% by mass of the entire PO composition (PE + PP).

To improve properties needed when used for battery separators, the PO may contain a PO component capable of imparting a shutdown function to a separator. Such shutdown-function-imparting PO component may be, for instance, LDPE. LDPE is preferably at least one selected from the group consisting of branched LDPE, linear LDPE (LLDPE), ethylene/α-olefin copolymer produced using a single-site catalyst, and low-molecular-weight PE having Mw of 1 x 10³ to 4 x 10³. The amount of the shutdown-function-imparting PO added is preferably 20% or less by mass based on 100% by mass of the entire PO. The addition of too much shutdown-function-imparting PO highly likely causes the rupture of the microporous PO membrane when stretched.

At least one optional component selected from the group consisting of polybutene-1 having Mw of 1 x 10⁴ to 4 x 10⁶, PE wax having Mw of 1 x 10³ to 4 x 10⁴ and ethylene/α-olefin copolymer having Mw of 1 x 10⁴ to 4 x 10⁶ may be added to a PE composition comprising the above UHMWPE. The amount of these optional components added is preferably 20% or less by mass based on 100% by mass of the entire PO composition.

[2] Production method of microporous polyolefin membrane

The method of the present invention for producing a microporous PO membrane comprises the steps of (1) adding a membrane-forming solvent to the above PO, and melt-blending the PO and the membrane-forming solvent to prepare a PO solution, (2) extruding the PO solution through a die lip and cooling the extrudate to form a gel molding, (3) subjecting the gel molding to first stretching at least uniaxially, (4) heat-setting the stretched gel molding, (5) removing the membrane-forming solvent, (6) drying the resultant membrane, and (7) subjecting the dried membrane to second stretching at least uniaxially. If necessary, the method may further comprise a heat treatment step (8), a cross-linking step with ionizing radiations (9), a hydrophilizing step (10), a surface-coating step (11), etc., after the steps (1) to (7).

(1) Preparation of polyolefin solution

PO is melt-blended with a proper membrane-forming solvent to prepare a PO solution. The PO solution, if necessary, may contain various additives such as antioxidants, ultraviolet absorbents, antiblocking agents, pigments, dyes, inorganic fillers, etc. in ranges not deteriorating the effects of the present invention. A fine silicate powder, for instance, may be added as a pore-forming agent.

The membrane-forming solvent may be liquid or solid. The liquid solvents may be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel molding having a stable liquid solvent content, non-volatile liquid solvents such as liquid paraffin are preferable. The solid solvent preferably has boiling point of 80°C or lower. Such a solid solvent is paraffin wax, ceryl alcohol, stearyl alcohol, dicyclohexyl phthalate, etc. The liquid solvent and the solid solvent may be used in combination.

The viscosity of the liquid solvent is preferably 30 to 500 cSt, more preferably 50 to 200 cSt, at 25°C. When the viscosity is less than 30 cSt, the PO solution is unevenly extruded through a die lip, resulting in difficulty in blending. The viscosity of more than 500 cSt makes the removal of the liquid solvent difficult.

Though not particularly restricted, the melt-blending method preferably comprises even melt-blending in an extruder. This method is suitable for preparing a high-concentration PO solution. The melt-blending temperature of the PO is preferably in a range of the melting point of PO +10°C to +100°C. Specifically, the melt-blending temperature is preferably 140 to 250°C, more preferably 170 to 240°C. The melting point is measured by differential scanning calorimetry (DSC) according to JIS K7121. The membrane-forming solvent may be added before blending, or charged into the extruder during blending, though the latter is preferable. In the melt-blending, an antioxidant is preferably added to prevent the oxidization of PO.

In the PO solution, the percentage of PO is 1 to 50% by mass, preferably 20 to 40% by mass, based on 100% by mass of the total amount of PO and the membrane-forming solvent. Less than 1% by mass of PO causes large swelling and neck-in at the die exit during extruding, resulting in decrease in the formability and self-supportability of the gel molding. More than 50% by mass of PO deteriorates the formability of the gel molding.

(2) Formation of gel molding

The melt-blended PO solution is extruded through the die of the extruder directly or through a die of another extruder. Alternatively, the melt-blended PO solution may be pelletized and then re-extruded through a die of another extruder. The die lip is generally a sheet-forming die lip having a rectangular mouth-shape, but may be a hollow die lip having a double-tube shape, an inflation die lip, etc. The sheet-forming die lip generally has a gap of 0.1 to 5 mm. The sheet-forming die lip is generally heated at 140 to 250°C when extruding. The extrusion speed of the heated solution is preferably 0.2 to 15 m/minute.

The solution thus extruded through the die lip is cooled to form a gel molding. Cooling is preferably conducted at a rate of 50°C/minute or more until reaching a gelation temperature. Such cooling sets a structure in which the PO phase is micro-phase-separated by the membrane-forming solvent, namely a gel structure of the PO phase and the membrane-forming solvent phase. Cooling is preferably conducted to 25°C or lower. The slower cooling rate generally leads to larger pseudo-cell units, resulting in a coarser higher-order structure of the resultant gel molding. On the other hand, the higher cooling rate leads to denser cell units. The cooling rate less than 50°C/minute causes increase in crystallinity, making it unlikely to provide the gel molding with suitable stretchability. Usable as the cooling method are a method of bringing the extrudate into contact with a cooling medium such as cooling air, cooling water, etc., a method of bringing the extrudate into contact with a cooling roll, etc.

(3) First stretching

The resultant gel molding in a sheet form is stretched at least uniaxially. The stretching causes cleavage between PO crystal lamellas, making the PO phases finer and forming a large number of fibrils. The fibrils form a three-dimensional network structure (an irregularly, three-dimensionally combined network structure). The gel molding can be evenly stretched because it contains the membrane-forming solvent. The first stretching of the gel molding may be conducted after heated to a predetermined magnification by a typical tenter method, a roll method, an inflation method, a rolling method or a combination thereof. The first stretching may be uniaxial or biaxial, though is preferably biaxial. The biaxial stretching may be simultaneous biaxial stretching or sequential stretching, though the simultaneous biaxial stretching is preferable because it provides better-balanced properties.

Though the stretching magnification varies according to the thickness of the gel molding, it is preferably 2 folds or more, more preferably 3 to 30 fold in the case of uniaxial stretching. In order to improve the pin puncture strength, the magnification of biaxial stretching is preferably 3 folds or more in any direction, namely 9 folds in area magnification. When the area magnification is less than 9 folds, the stretching is so insufficient to obtain a high-elastic and high-strength microporous PO membrane. When the area magnification is more than 400 folds, restrictions occur on stretching apparatuses, stretching operations, etc.

The first stretching temperature is preferably in a range from the crystal dispersion temperature of PO to the crystal dispersion temperature +30°C, more preferably from the crystal dispersion temperature +10°C to the crystal dispersion temperature +25°C. When the stretching temperature is higher than the crystal dispersion temperature +30°C, molecular chains have low orientation after stretching. When the stretching temperature is lower than the crystal dispersion temperature, the gel molding is so insufficiently softened that it is likely broken by stretching, failing to achieve even stretching. The crystal dispersion temperature is determined by measuring the temperature characteristics of dynamic viscoelasticity according to ASTM D 4065. The crystal dispersion temperature of PE is generally 90 to 100°C. When the PO is composed of PE, therefore, the stretching temperature is generally 90 to 130°C, preferably 100 to 125°C.

As the first stretching, a multi-stage stretching may be conducted at different temperatures. The temperature in the second stage is preferably higher than in the first stage, resulting in even lamellas, to obtain a microporous membrane having a higher-order structure with a large pore diameter and permeability with no decrease in strength and properties in the width direction. The difference of the stretching temperature between the first and second stages is preferably 5°C or more, though not restrictive. In the temperature elevation from the first stage to the second stage, (a) it may be conducted during stretching, or (b) stretching may be stopped during the temperature elevation, and the second-stage stretching may start when reaching a predetermined temperature, though the former (a) is preferable. In the temperature elevation, rapid heating is preferable in each case. Specifically, the heating is preferably at a rate of 0.1°C/second or more, more preferably at a rate of 1 to 5°C/second. Needless to say, the stretching temperature and the total stretching magnification in the first and second stages are within the above-mentioned ranges, respectively.

Depending on the desired properties, the gel molding in a sheet form may be stretched with a temperature distribution in a thickness direction to provide the resultant microporous PO membrane with further improved mechanical strength. Usable for this stretching, for instance, is a method disclosed by JP7-188440A.

(4) Heat-setting

The first-stretched membrane is then heat-set. The heat-setting treatment stabilizes crystals in the membrane, resulting in even lamellas. With a thus stabilized network structure of fibrils formed by the first stretching, the subsequent removal of the membrane-forming solvent provides the microporous membrane with a large pore diameter and high strength. A microporous membrane obtained by the present invention in which the heat-setting is conducted on the stretched gel molding containing the membrane-forming solvent has higher compression resistance than that of a microporous membrane obtained through a heat-setting conducted after removing the membrane-forming solvent from the stretched gel molding.

The heat-setting is conducted by a tenter method, a roll method or a rolling method. The heat-setting temperature is in a range from the crystal dispersion temperature of PO forming the microporous membrane to the melting point of the PO. The heat-setting temperature is preferably equal to or higher than the first stretching temperature, to have improved evenness of lamellas and a higher-order structure having a larger pore diameter and higher strength. When the first stretching comprises the above-mentioned multi-stage stretching at different temperatures, the heat-setting temperature is preferably equal to or higher than the highest temperature in the multi-stage stretching.

(5) Removal of membrane-forming solvent

The membrane-forming solvent is removed (washed away) using a washing solvent. Because the PO phase is separated from the membrane-forming solvent, the microporous membrane is obtained by removing of the membrane-forming solvent. The washing solvents may be well-known solvents, for instance, chlorinated hydrocarbons such as methylene chloride, carbon tetrachloride, etc.; hydrocarbons such as pentane, hexane, heptane, etc.; fluorohydrocarbons such as trifluoroethane, etc.; ethers such as diethyl ether, dioxane, etc.; volatile solvents such as methyl ethyl ketone. Further usable is a washing solvent having a surface tension of 24 mN/m or less at 25°C described by JP2002-256099A. When a washing solvent having such a surface tension is removed by drying, the shrinkage of the network structure is less likely to occur by tensions in gas-liquid interfaces inside pores.

The heat-set membrane can be washed by immersion in the washing solvent and/or the showering of the washing solvent. The washing solvent used is preferably 300 to 30,000 parts by mass per 100 parts by mass of the membrane. The washing temperature is usually 15 to 30°C, and the membrane may be heated, if necessary, during washing. The heat-washing temperature is preferably 80°C or lower. The membrane is preferably washed until the amount of the remaining membrane-forming solvent becomes less than 1% by mass of that added.

(6) Drying of membrane

The membrane obtained by stretching the gel molding and removing the membrane-forming solvent is then dried by a heat-drying method, a wind-drying method, etc. The drying temperature is preferably equal to or lower than the crystal dispersion temperature of PO, more particularly 5°C or more lower than the crystal dispersion temperature.

The percentage of the remaining washing solvent in the microporous membrane after drying is preferably 5% or less by mass, more preferably 3% or less by mass, based on 100% by mass of the dried membrane. Insufficient drying undesirably leads to the washing solvent remaining in a large amount in the membrane, resulting in the second-stretched membrane with low porosity and thus poor permeability.

(7) Second stretching

The dried membrane is re-stretched at least uniaxially. The second stretching may be conducted by a tenter method, etc. like the first stretching while heating the membrane. The second stretching may be uniaxial or biaxial. The biaxial stretching may be any one of simultaneous biaxial stretching and sequential stretching, though the simultaneous biaxial stretching is preferable.

The second stretching magnification in the stretching direction is preferably 1.1 to 2.5 fold. The magnification of the uniaxial stretching, for instance, is 1.1 to 2.5 fold in a longitudinal direction (a machine direction; MD) or a transversal direction (a width direction; TD). The magnifications of the biaxial stretching are 1.1 to 2.5 fold in MD and TD, respectively. The magnifications of the biaxial stretching may be the same or different in MD and TD as long as the magnifications in both of MD and TD are within 1.1 to 2.5 fold, though the same magnification is preferable. When the magnification is less than 1.1 folds, the compression resistance is insufficient. When the magnification is more than 2.5 folds, the membrane undesirably tends to be easily broken and have low heat shrinkage resistance. The stretching magnification is more preferably 1.1 to 2 fold, most preferably 1.1 to 1.6 fold.

The second stretching temperature is preferably in a range from the crystal dispersion temperature of PO forming the microporous membrane to the crystal dispersion temperature +40°C, more preferably from the crystal dispersion temperature +10°C to the crystal dispersion temperature +40°C. When the second stretching temperature is more than the crystal dispersion temperature +40°C, the microporous membrane has low permeability and compression resistance, and large unevenness of properties (particularly air permeability) in a sheet-width direction when stretched in TD. When the second stretching temperature is lower than the crystal dispersion temperature, the PO is so insufficiently softened that it is likely broken by stretching, failing to achieve even stretching. When the PO is composed of PE, the stretching temperature is generally 90 to 140°C, preferably 100 to 135°C.

The diameters of pores obtained by the first stretching, the heat-setting and the removal of a solvent are made larger by the above second stretching after heat-setting, resulting in improvement in compression resistance. As a result, the microporous membrane is provided with high permeability and compression resistance. Because the pore diameter can be controlled by the second stretching magnification, the pore diameter may be adjusted depending on the use of the microporous membrane.

Though not restricted, it is preferable to use an inline method in which the first stretching step, the heat-setting step, the step of removing a membrane-forming-solvent, the drying step and the second stretching step are continuously conducted in one line. However, an offline method in which the dried membrane is once wound and then unwound to conduct the second stretching may be used, if necessary.

(8) Heat treatment

The second-stretched membrane is preferably reheated. The reheating can stabilize the structure formed by the second stretching. The reheating may include heat-setting and/or annealing, which are properly selectable depending on the desired properties of the microporous membrane, though the heat-setting is preferable.

The annealing is conducted by a tenter method, a roll method, a rolling method, a belt conveyor method or a floating method. The annealing temperature is equal to or lower than the melting point of the microporous PO membrane. The shrinkage of the membrane by annealing is suppressed such that the length of the annealed membrane in the second stretching direction is preferably 91% or more, more preferably 95% or more, of the length before the second stretching. Such annealing provides well-balanced strength and permeability to the membrane. The shrinkage to less than 91 % deteriorates the balance of properties, particularly permeability, in the width direction after the second stretching. The heating treatment may be a combination of many heat-setting steps and many annealing steps.

(9) Cross-linking of membrane

The second-stretched microporous membrane may be cross-linked by ionizing radiation. The ionizing radiation rays may be α-rays, β-rays, γ-rays, electron beams, etc. The cross-linking by ionizing radiation may be conducted with electron beams of 0.1 to 100 Mrad and at accelerating voltage of 100 to 300 kV. The cross-linking treatment can elevate the meltdown temperature of the membrane.

(10) Hydrophilizing

The second-stretched microporous membrane may be hydrophilized. The hydrophilizing treatment may be a monomer-grafting treatment, a surfactant treatment, a corona-discharging treatment, a plasma treatment, etc. The monomer-grafting treatment is preferably conducted after ionizing radiation.

The surfactants may be any of nonionic surfactants, cationic surfactants, anionic surfactants and amphoteric surfactants, though the nonionic surfactants are preferable. The microporous membrane is hydrophilized by dipped in a solution of the surfactant in water or a lower alcohol such as methanol, ethanol, isopropyl alcohol, etc., or by coated with the solution by a doctor blade method.

The hydrophilized microporous membrane is dried. To provide the microporous PO membrane with improved permeability, it is preferable to conduct heat treatment at a temperature equal to or lower than the melting point of the polyolefin microporous membrane while preventing its shrinkage during drying. For such shrinkage-free heat treatment, for instance, the above-described heat treatment method may be conducted on the hydrophilized microporous membrane.

(11) Coating

The second-stretched microporous membrane may be coated with PP; a porous body of fluororesins such as polyvinylidene fluoride, polytetrafluoroethylene, etc.; a porous body of polyimide, polyphenylene sulfide, etc., to have high meltdown properties when used as battery separators. The coating PP preferably has Mw in a range from 5,000 to 500,000 and solubility of 0.5 g or more per 100 g of toluene at 25°C. This PP preferably has a racemic diad fraction of 0.12 to 0.88. The racemic diad means a pair of polymer-constituting units enantiomeric to each other.

[3] Microporous polyolefin membrane

The microporous membrane according to a preferred embodiment of the present invention has the following properties.

(1) It has air permeability (Gurley value) of 30 to 400 seconds/100 cm³ (converted to the value at 20-µm thickness). The air permeability in this range provides batteries with large capacity and good cyclability. The air permeability of less than 30 seconds/100 cm³/20 µm might not cause shutdown sufficiently during temperature elevation in batteries. When the microporous membrane is used for a filter, the air permeability is preferably equal to or less than 300 seconds/100 cm³/20 µm. The air permeability can be controlled by selecting the second stretching magnification.

(2) It has porosity of 25 to 80%. When the porosity is less than 25%, excellent air permeability is not obtained. When the porosity exceeds 80%, battery separators formed by the microporous membrane have insufficient strength, resulting in large likelihood of short-circuiting of electrodes.

(3) As above described, an average pore diameter of the microporous membrane can be controlled by selecting the second stretching magnification. Generally, the average pore diameter is preferably 0.01 to 1.0 µm. When the microporous membrane is used for battery separators, the average pore diameter is more preferably 0.03 µm or more, most preferably 0.04 µm or more. When the average pore diameter is 0.03 µm or more, the microporous membrane is provided with higher permeability, resulting in excellent osmosis of the electrolysis solution. The average pore diameter of the separator is not particularly restricted. However, when the average pore diameter exceeds 10 µm, the growth of dendrites cannot be suppressed, resulting in large likelihood of the short-circuiting of electrodes. When the microporous membrane is used for a filter, the average pore diameter is preferably 0.01 to 0.1 µm.

(4) It has pin puncture strength of 1,500 mN/20 µm or more. When the pin puncture strength is less than 1,500 mN/20 µm, short-circuiting is likely to occur in batteries with separators formed by the microporous membrane. When the microporous membrane is used for separators of lithium batteries, the pin puncture strength is preferably 5,000 mN/20 µm or more.

(5) It has tensile rupture strength of 20,000 kPa or more in both MD and TD, so that it is unlikely to be broken. The tensile rupture strength is preferably 100,000 kPa or more in both MD and TD.

(6) It has tensile rupture elongation of 100% or more in both MD and TD, so that it is unlikely to be broken.

(7) It has a heat shrinkage ratio of 25% or less in both MD and TD after exposed to 105°C for 8 hours. When the heat shrinkage ratio exceeds 25%, heat generated in lithium batteries with separators formed by the microporous membrane causes the shrinkage of the separator edges, making it highly likely that short-circuiting of electrodes occurs. When the microporous membrane is used for separators for lithium batteries, the heat shrinkage ratio is preferably 10% or less in both MD and TD.

(8) It has a thickness change ratio of 15% or more after heat compression at 90°C and 2.2 MPa (22 kgf/cm²) for 5 minutes. When the thickness change ratio is 15% or more, batteries with separators formed by the microporous membrane have good absorbability of electrode expansion, large capacity and good cyclability. The thickness change ratio is preferably 20% or more.

(9) It has post-heat-compression air permeability (converted to the value at 20-µm thickness) of 700 seconds/100 cm³ or less. The post-heat-compression air permeability is air permeability (Gurley value) after heat compression under the above-mentioned conditions. Batteries with separators formed by the microporous membrane having post-heat-compression air permeability of 700 seconds/100 cm³/20 µm or less have large capacity and good cyclability. The post-heat-compression air permeability is preferably 600 seconds/100 cm³/20 µm or less.

As described above, the microporous membrane of the present invention has a large pore diameter and excellent air permeability, compression resistance and mechanical strength, so that it is suitable for battery separators, filters, etc. Though properly selectable depending on its use, the thickness of the microporous membrane is preferably 5 to 25 µm for battery separators, and 20 to 60 µm for filters.

The present invention will be explained in more detail referring to Examples below without intention of restricting the scope of the present invention, where Example 7 is a reference example related to the present invention and usefull to understand it.

Example 1

100 parts by mass of PE composition having Mw/Mn of 12.0, a melting point of 135°C and a crystal dispersion temperature of 100°C, which comprised 18% by mass of UHMWPE having Mw of 2.0 x 10⁶ and Mw/Mn of 8 and 82% by mass of HDPE having Mw of 3.0 x 10⁵ and Mw/Mn of 8.6, was mixed with 0.375 parts by mass of tetrakis [methylene-3-(3,5-ditertiary-butyl-4-hydroxyphenyl)-propionate] methane as an antioxidant. 32 parts by mass of the PE composition was charged into a strong-blending double-screw extruder having an inner diameter of 58 mm and L/D of 42, and 68 parts by mass of liquid paraffin was supplied to the double-screw extruder via a side feeder. Melt-blending was conducted at 210°C and 200 rpm to prepare a PE solution in the extruder. The PE solution was then extruded from a T-die mounted to a tip end of the extruder to form a sheet having a thickness of 1.4 mm, which was pulled by cooling rolls controlled at 40°C to form a gel molding. The gel molding was simultaneously biaxially stretched to 5 x 5 folds by a tenter-stretching machine at 116°C (first stretching). The stretched membrane held by a tenter was heat-set at 125°C for 5 minutes (first heating). The stretched membrane was fixed to an aluminum frame of 20 cm x 20 cm, and immersed in a bath of methylene chloride controlled at 25°C for washing with vibration of 100 rpm for 3 minutes. The washed membrane was air-dried at room temperature. The dried membrane was re-stretched by a tenter-stretching machine to a magnification of 1.4 folds in TD while being heated at 120°C (second stretching). The re-stretched membrane held by a tenter was heat-set at 130.5°C for 30 seconds (second heating), to produce a microporous PE membrane. The first stretching, the first heating, the washing, the drying, the second stretching and the second heating were continuously conducted in one line.

Example 2

A microporous PE membrane was produced in the same manner as in Example 1 except for changing the PE solution concentration to 28% by mass, the first heating temperature to 124°C, the second stretching magnification to 1.2 folds, and the second heating temperature to 131°C.

Example 3

A microporous PE membrane was produced in the same manner as in Example 1, except for using HDPE having Mw of 3.5 x 10⁵ and Mw/Mn of 13.5, and changing the PE solution concentration to 30% by mass, the first heating temperature to 124°C, the second stretching magnification to 1.5 folds, and the second heating temperature to 128°C, as shown in Table 1.

Example 4

A microporous PE membrane was produced in the same manner as in Example 1, except that the PE solution concentration was 28% by mass, that the first stretching temperature was elevated at a time when the gel molding was stretched to a magnification of 2.5 x 2.5 folds in the course of the first stretching, at a rate of 1°C/second between 116°C and 124°C, that the first heating temperature was 124°C, and that the second heating temperature was 130°C.

Example 5

A microporous PE membrane was produced in the same manner as in Example 1, except that the PE solution concentration was 28% by mass, that the first stretching was sequential stretching comprising stretching the gel molding to a magnification of 2.5 folds in MD at 110°C, elevating the temperature to 117°C at a speed of 1°C/second, and then stretching the gel molding to a magnification of 10 folds in TD, that the first heating temperature was 124°C, that the second stretching magnification in MD was 1.3 folds, and that the second heating temperature was 131°C.

Example 6

A microporous PE membrane was produced in the same manner as in Example 1, except that the PE solution concentration was 28% by mass, that the first heating temperature was 124°C, and that the second stretching was sequential stretching comprising stretching the dried membrane to a magnification of 1.1 folds in MD and then to a magnification of 1.3 folds in TD, and that the second heating temperature was 130°C.

Example 7

A microporous PE membrane was produced in the same manner as in Example 1 except that the PE solution concentration was 28% by mass, that the thickness of the gel molding was 2 mm, that the first stretching temperature was elevated at a time when the gel molding was stretched to a magnification of 2.5 x 2.5 folds in the course of the first stretching, at a rate of 1°C/second between 117°C and 125°C, that the second stretching was conducted to the magnification of 1.5 folds at 110°C, and that the second heating temperature was 110°C.

Example 8

A microporous PE membrane was produced in the same manner as in Example 1, except that the PE solution concentration was 28% by mass, that the first heating temperature was 124°C, and that the second-stretched membrane held by a tenter was annealed at 129.5°C for 30 seconds, so that it shrank to 120% of the length before the second stretching in TD.

Example 9

A microporous PE membrane was produced in the same manner as in Example 1, except that the PE composition comprised UHMWPE and HDPE at a mass ratio of 30/70, that the PE solution concentration was 28.5% by mass, that the first stretching temperature was 114°C, that the first heating temperature was 122°C, that the second stretching was conducted to the magnification of 1.2 folds at 128°C, and that the second heating temperature was 128°C.

Comparative Example 1

A microporous PE membrane was produced in the same manner as in Example 1, except that HDPE having Mw of 3.5 x 10⁵ and Mw/Mn of 13.5 was used, that the PE solution concentration was 30% by mass, that the first heating was conducted at 124°C for 10 seconds, and that the second stretching and the second heating were not conducted, as shown in Table 1.

Comparative Example 2

A microporous PE membrane was produced in the same manner as in Example 1, except that the PE solution concentration was 28% by mass, that the first heating was conducted at 127°C for 10 seconds, and that the second stretching and the second heating were not conducted.

Comparative Example 3

A microporous PE membrane was produced in the same manner as in Example 1, except that the PE solution concentration was 28% by mass, that the heat-setting treatment was not conducted after uniaxial stretching, that the second stretching magnification was 1.05 folds, and that the second heating was conducted at 127°C for 10 seconds.

Comparative Example 4

A microporous PE membrane was produced in the same manner as in Example 1, except that the PE solution concentration was 28% by mass, that the heat-setting treatment was not conducted after uniaxial stretching, and that the second stretching magnification was 3 folds.

Comparative Example 5

An attempt was conducted to produce a microporous PE membrane in the same manner as in Example 1, except that the PE solution concentration was 28% by mass, that the first heating was conducted at 140°C for 10 seconds, and that the second stretching and the second heating were not conducted. However, only a broken microporous PE membrane was obtained.

Comparative Example 6

A microporous PE membrane was produced in the same manner as in Example 1, except that a PE composition comprising 13% by mass of UHMWPE having Mw of 2.0 x 10⁶ and Mw/Mn of 8 and 87% by mass of HDPE having Mw of 3.5 x 10⁵ and Mw/Mn of 13.5 was used, that the PE solution concentration was 15% by mass, that the first stretching temperature was 115°C, that the heat-setting was not conducted before washing, that the second stretching was conducted to a magnification of 1.5 folds at 90°C, followed by the heat-setting at 120°C for 10 seconds, as shown in Table 1.

Comparative Example 7

A microporous PE membrane was produced in the same manner as in Example 1, except that a PE composition comprising 18% by mass of UHMWPE having Mw of 2.0 x 10⁶ and Mw/Mn of 8 and 82% by mass of HDPE having Mw of 3.5 x 10⁵ and Mw/Mn of 8.6 was used, that the PE solution concentration was 28% by mass, that the first stretching temperature was 115°C, that the heat-setting was conducted at 128°C for 10 seconds after washing, that the second stretching was conducted to a magnification of 1.2 folds at 128°C, followed by the heat-setting at 128°C for 10 seconds, as shown in Table 1.

The properties of the microporous PE membranes of Examples 1 to 9 and Comparative Examples 1 to 7 were measured by the following methods. The results are shown in Table 1.

(1) Thickness: Measured by a contact thickness meter available from Mitutoyo Corporation.

(2) Air permeability (Gurley value): Measured according to JIS P8117 (converted to the value at 20-µm thickness).

(3) Porosity: Measured by a weight method.

(4) Average pore diameter: diameters of 20 pores were measured by atomic force microscopy (AFM), and averaged to determine the average pore diameter.

(5) Pin puncture strength: The maximum load was measured when the microporous membrane was pricked with a needle of 1 mm in diameter (0.5 mm R) at a rate of 2 mm/second.

(6) Tensile rupture strength: Measured on a 10-mm-wide rectangular test piece according to ASTM D882.

(7) Tensile rupture elongation: Measured on a 10-mm-wide rectangular test piece according to ASTM D882.

(8) Heat shrinkage ratio: The shrinkage ratios of each microporous membrane in MD and TD were measured three times when exposed to 105°C for 8 hours, and averaged to determine the heat shrinkage.

(9) Compression resistance: The membrane was sandwiched by a pair of press plates having high-flat surfaces, and pressed by a pressing machine at 90°C and 2.2 MPa for 5 minutes, to subject the membrane to even heat compression. The thickness and air permeability (post-heat-compression air permeability) of the heat-compressed membrane were measured by the above-mentioned method. The thickness change ratio was calculated relative to the thickness (100%) of the membrane before heat compression.

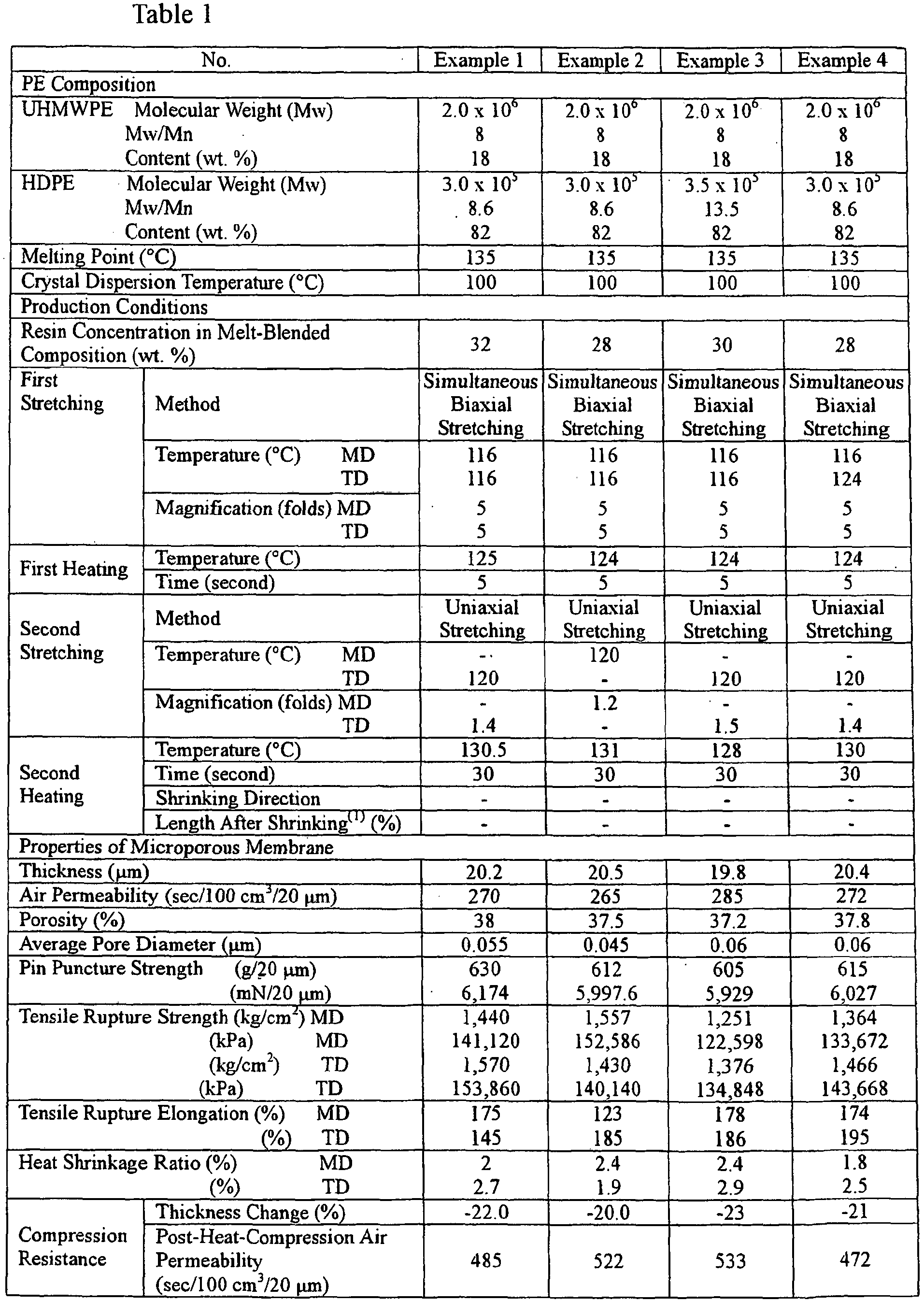

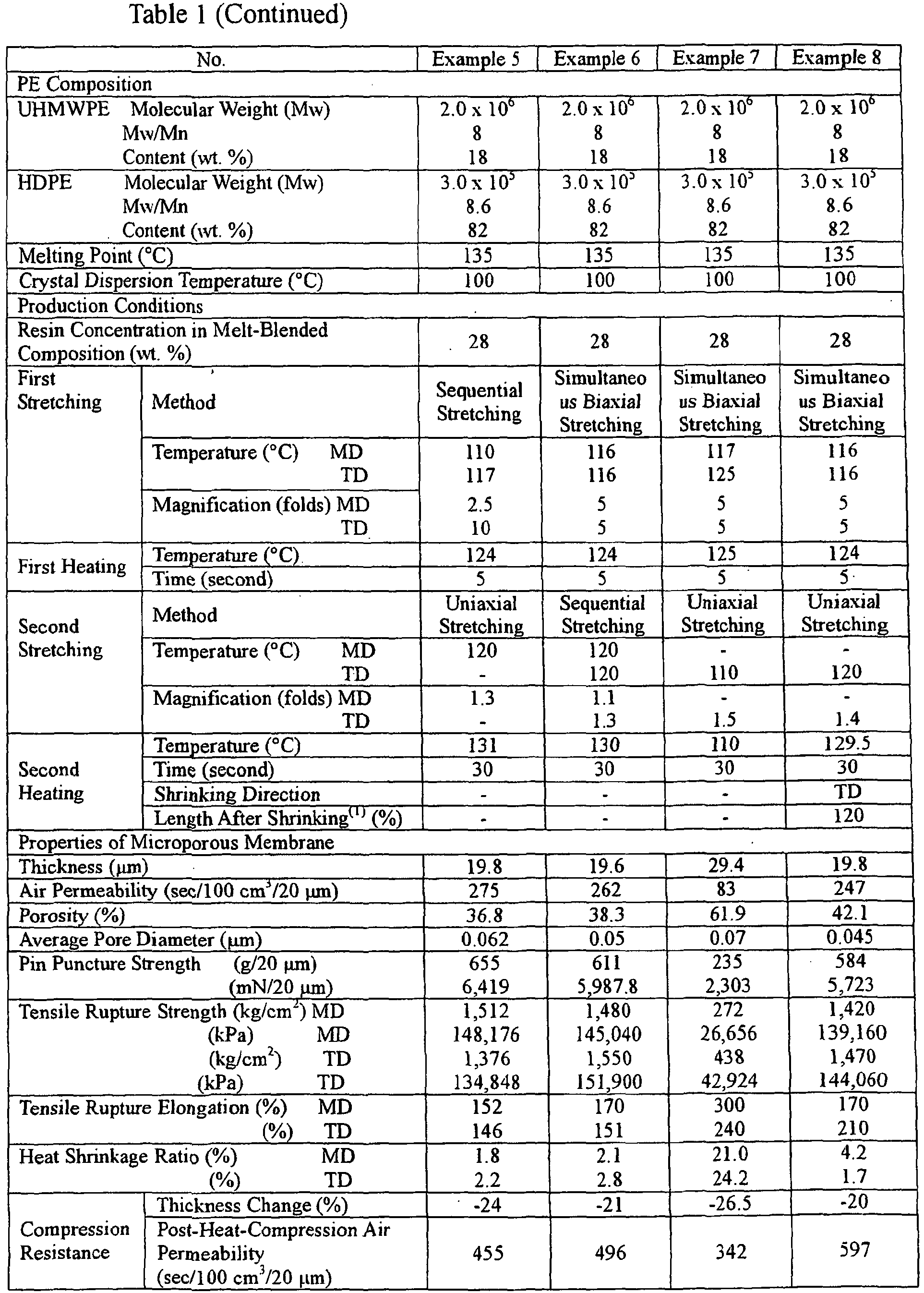

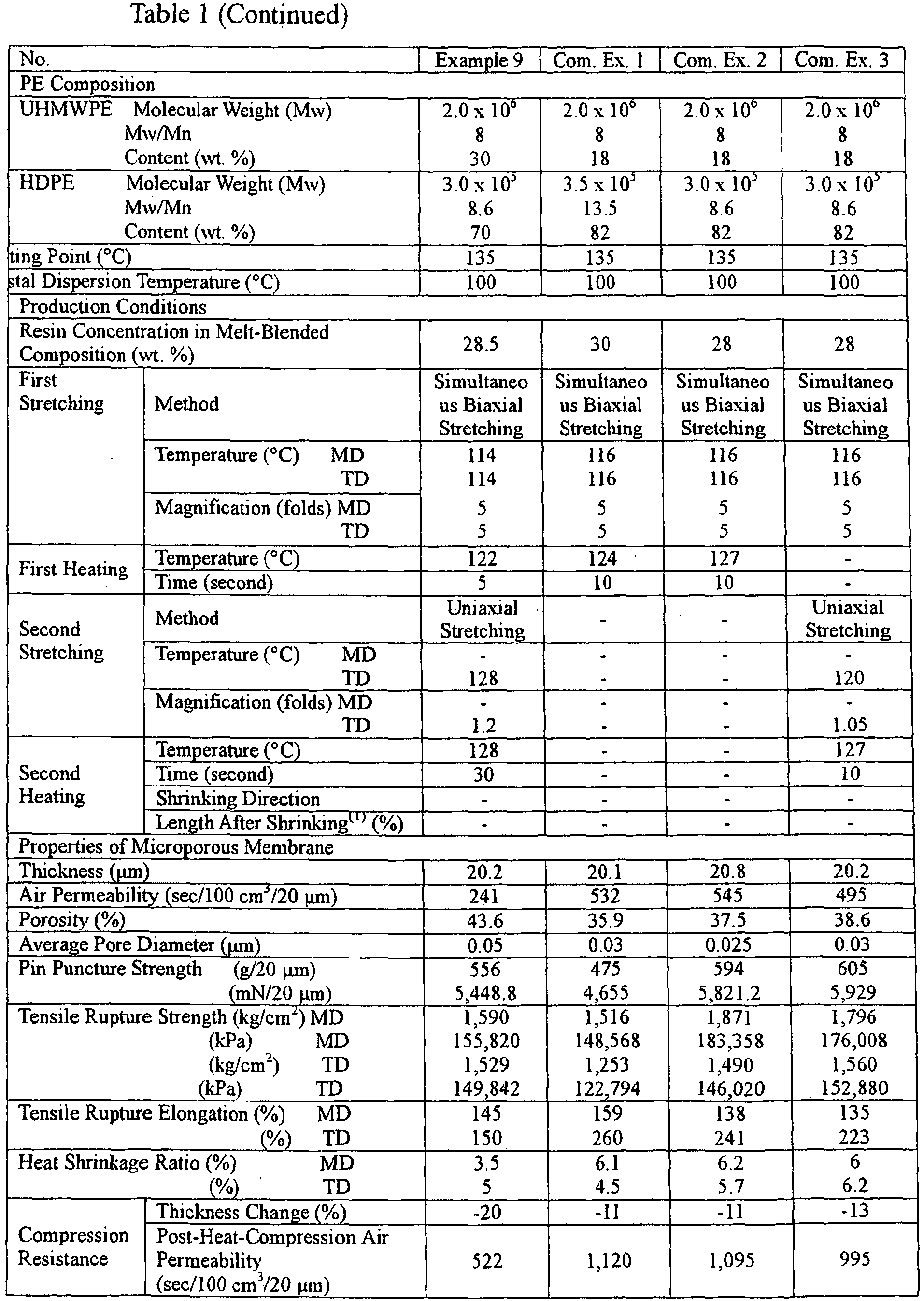

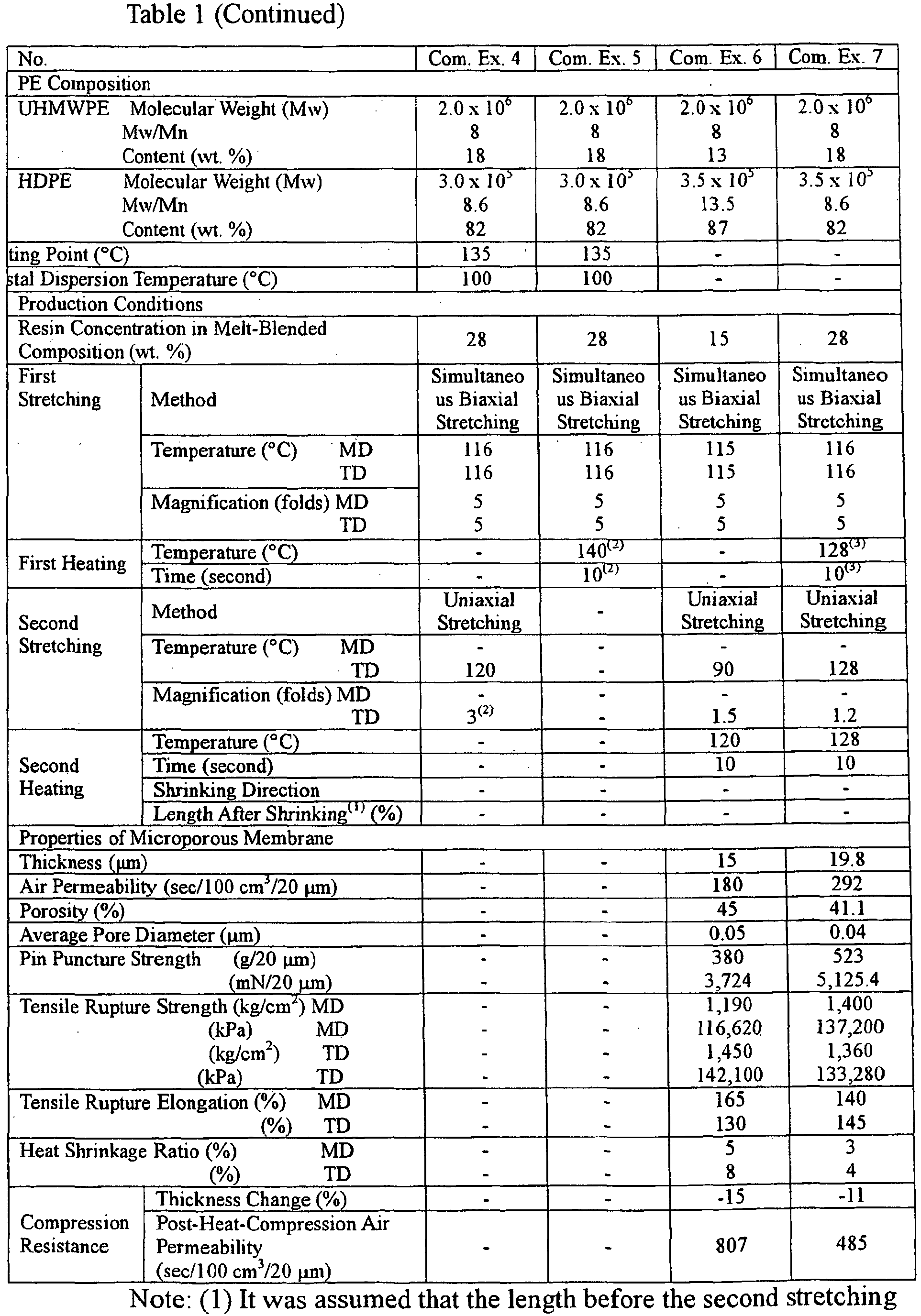

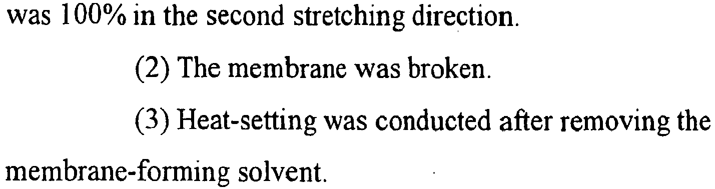

As is clear from Table 1, each microporous membrane of Examples 1 to 9 had well-balanced air permeability, pin puncture strength, tensile rupture strength, tensile rupture elongation and heat shrinkage resistance, a large average pore diameter, and a large thickness change ratio after heat compression, and a small air permeability after heat compression, because the second stretching was conducted to the microporous membrane after the first stretching and heat-setting. On the other hand, each microporous membrane of Comparative Examples 1 and 2 had poorer air permeability, a smaller average pore diameter, and a smaller thickness change ratio after heat compression, and a larger air permeability after heat compression than those of Examples 1 to 9, because the second stretching was not conducted after the first stretching and heat-setting. The microporous membrane of Comparative Example 3 had poorer air permeability, a smaller average pore diameter, and a smaller thickness change ratio after heat compression, and a larger air permeability after heat compression than those of Examples 1 to 9, because the first-stretched membrane was not heat-set, and because the second stretching magnification was less than 1.1. The microporous membrane of Comparative Example 4 was broken because the second stretching magnification exceeded 3 folds. The microporous membrane of Comparative Example 5 was broken because the heat-setting temperature after the first stretching exceeded the melting point of the microporous membrane. The microporous membrane of Comparative Example 6 had a smaller thickness change ratio after heat compression, and a larger air permeability after heat compression than those of Examples 1 to 9, because heat-setting was not conducted after the first-stretching. The microporous membrane of Comparative Example 7 had a smaller thickness change ratio after heat compression than that of Examples 1 to 9, because the heat-setting was conducted after washing.

### EFFECT OF THE INVENTION

The microporous polyolefin membrane of the present invention has a large pore diameter and excellent air permeability, mechanical strength and compression resistance. Therefore, battery separators formed by the microporous membranes of the present invention have excellent cyclability and electrolytic solution absorption, and improve battery life and productivity. Filters formed by the microporous membranes of the present invention have excellent particle removal performance though no pore-forming additives were used.

The method of the present invention provides a microporous polyolefin membrane with a large pore diameter and excellent compression resistance. Because pore diameters can be adjusted by selecting the second stretching ratio in the production method of the present invention, the particle removal performance of filters formed by the microporous polyolefin membranes are easily controlled.

## Claims

1. A microporous polyolefin membrane comprising air permeability of 30 to 400 sec/100 cm³/20 µm, a porosity of 25 to 80%, a pin puncture strength of 5,000 mN/20 µm or more, an average pore diameter of 0.01 to 0.1 µm, a thickness change ratio of 15% or more after heat compression at 2.2 MPa and 90°C for 5 minutes, and air permeability of 700 sec/100 cm³/20 µm or less after said heat compression.

2. A method for producing a microporous polyolefin membrane comprising the steps of
(1) melt-blending a polyolefin and a membrane-forming solvent,
(2) extruding the resultant melt blend through a die,
(3) cooling the resultant extrudate to form a gel molding,
(4) subjecting said gel molding to a first stretching at least uniaxially,
(5) heat-setting the stretched gel molding at a temperature ranging from the crystal dispersion temperature of said polyolefin to the melting point of said polyolefin,
(6) removing said membrane-forming solvent, and
(7) subjecting the resultant membrane to a second stretching at least uniaxially.

3. The method for producing a microporous polyolefin membrane according to claim 2, wherein the magnification of said second stretching in the stretching direction is 1.1 to 2.5.

4. The method for producing a microporous polyolefin membrane according to claim 2 or 3, wherein the temperature of said second stretching is in a range from the crystal dispersion temperature of said polyolefin to the crystal dispersion temperature of said polyolefin +40°C.

5. The method for producing a microporous polyolefin membrane according to any one of claims 2 to 4, wherein said first stretching step comprises two stages where the temperature is higher in a second stage than in a first stage.

6. The method for producing a microporous polyolefin membrane according to any one of claims 2 to 5, wherein the temperature is higher in said heat-setting than in said first stretching.

7. The method for producing a microporous polyolefin membrane according to any one of claims 2 to 6, wherein the membrane is heat-set again after the second stretching.

## Patentansprüche

1. Mikroporöse Polyolefinmembran mit einer Luftdurchlässigkeit von 30 bis 400 sec/100 cm³/20 µm, einer Porosität von 25 bis 80%, einer Nadelstichfestigkeit von 5000 mN/20 µm oder mehr, einem durchschnittlichen Porendurchmesser von 0,01 bis 0,1 µm, einem Dickenänderungsverhältnis von 15% oder mehr nach Wärmekompression bei 2,2 MPa und 90°C über 5 Minuten sowie einer Luftdurchlässigkeit von 700 sec/100 cm³/20 µm oder weniger nach der Wärmekompression.

2. Verfahren zum Herstellen einer mikroporösen Polyolefinmembran, das die folgenden Schritte umfasst:
(1) Schmelzmischen eines Polyolefins und eines membranbildenden Lösungsmittels,
(2) Extrudieren der resultierenden Schmelzmischung durch eine Düse,
(3) Kühlen des resultierenden Extrudats zum Bilden eines Formungsgels,
(4) Unterziehen des Formungsgels unter eine mindestens einachsige erste Dehnungsbehandlung,
(5) Thermofixieren des gedehnten Formungsgels bei einer Temperatur im Bereich von Kristalldispersionstemperatur des Polyolefins zum Schmelzpunkt des Polyolefins,
(6) Entfernen des membranbildenden Lösungsmittels und
(7) Unterziehen der resultierenden Membran unter eine mindestens einachsige zweite Dehnungsbehandlung.

3. Verfahren zum Herstellen einer mikroporösen Polyolefinmembran nach Anspruch 2, wobei die Vergrößerung der zweiten Dehnungsbehandlung in der Dehnungsrichtung zwischen 1,1 und 2,5 liegt.

4. Verfahren zum Herstellen einer mikroporösen Polyolefinmembran nach Anspruch 2 oder 3, wobei die Temperatur der zweiten Dehnungsbehandlung im Bereich von der Kristalldispersionstemperatur des Polyolefins bis zur Kristalldispersionstemperatur des Polyolefins plus 40°C liegt.

5. Verfahren zum Herstellen einer mikroporösen Polyolefinmembran nach einem der Ansprüche 2 bis 4, wobei die erste Dehnungsbehandlung zwei Stufen umfasst, wobei die Temperatur in der zweiten Stufe höher als in der ersten Stufe ist.

6. Verfahren zum Herstellen einer mikroporösen Polyolefinmembran nach einem der Ansprüche 2 bis 5, wobei die Temperatur beim Thermofixieren höher als bei der ersten Dehnungbehandlung ist.

7. Verfahren zum Herstellen einer mikroporösen Polyolefinmembran nach einem der Ansprüche 2 bis 6, wobei die Membran nach der zweiten Dehnungsbehandlung wieder thermofixiert wird.

## Revendications

1. Membrane polyoléfinique microporeuse présentant une perméabilité à l'air de 30 à 400 s/100 cm³/20 µm, une porosité de 25 à 80 %, une résistance à la perforation par une aiguille de 5 000 mN/20 µm ou plus, un diamètre moyen des pores de 0,01 à 0,1 µm, un rapport de changement d'épaisseur de 15 % ou plus après compression thermique à 2,2 MPa et 90 °C pendant 5 minutes, et une perméabilité à l'air de 700 s/100 cm³/20 µm ou moins après ladite compression thermique.

2. Procédé de production d'une membrane polyoléfinique microporeuse comprenant les étapes consistant à
(1) mélanger à l'état fondu une polyoléfine et un solvant conduisant à la formation d'une membrane,
(2) extruder le mélange fondu résultant à travers une filière,
(3) refroidir l'extrudat résultant pour former un moulage en gel,
(4) soumettre ledit moulage en gel à un premier étirage au moins uniaxialement,
(5) thermodurcir le moulage en gel étiré à une température allant de la température de dispersion des cristaux de ladite polyoléfine au point de fusion de ladite polyoléfine,
(6) éliminer ledit solvant conduisant à la formation d'une membrane, et
(7) soumettre la membrane résultante à un deuxième étirage au moins uniaxialement.

3. Procédé de production d'une membrane polyoléfinique microporeuse selon la revendication 2, dans lequel l'ampleur dudit deuxième étirage dans la direction de l'étirage est de 1,1 à 2.5.

4. Procédé de production d'une membrane polyoléfinique microporeuse selon la revendication 2 ou 3, dans lequel la température dudit deuxième étirage se situe dans une plage allant de la température de dispersion des cristaux de ladite polyoléfine à la température de dispersion des cristaux de ladite polyoléfine +40 °C.

5. Procédé de production d'une membrane polyoléfinique microporeuse selon l'une quelconque des revendications 2 à 4, dans lequel ladite première étape d'étirage comprend deux phases dans lesquelles la température est plus élevée dans une deuxième phase que dans une première phase.

6. Procédé de production d'une membrane polyoléfinique microporeuse selon l'une quelconque des revendications 2 à 5, dans lequel la température est plus élevée dans ledit thermodurcissement que dans ledit premier étirage.

7. Procédé de production d'une membrane polyoléfinique microporeuse selon l'une quelconque des revendications 2 à 6, dans lequel la membrane est de nouveau thermodurcie après le deuxième étirage.
